# FASCICULE DE BREVET EUROPEEN

(11) **EP 3 714 506 B1**
(45) Date de publication et mention de la délivrance du brevet: **29.01.2025**
(21) Numéro de dépôt: 18807928.9
(22) Date de dépôt: 20.11.2018
(51) Int. Cl.: H01M 10/615, H01M 10/613

(54) **DISPOSITIF DE REFROIDISSEMENT ET/OU CHAUFFAGE D'UNE BATTERIE DE VEHICULE AUTOMOBILE ELECTRIQUE OU HYBRIDE**
KÜHL- UND/OR HEIZ-GERÄT FÜR BATTERIE EINES ELEKTRISCHEN ODER HYBRIDEN AUTOS
COOLING AND/OR HEATING DEVICE FOR A BATTERY USED IN A ELECTRICAL OR HYBRID CAR

(30) Priorité: 24.11.2017 FR 1761145
(43) Date de publication de la demande: 30.09.2020
(73) Titulaire: Arkema France, 92700 Colombes (FR)
(72) Inventeur: RACHED, Wissam, 69630 Chaponost (FR); DUFAURE, Nicolas, 27300 Bernay (FR)
(74) Mandataire: Bandpay & Greuter
(86) Numéro de dépôt international: PCT/EP2018/081861
(87) Numéro de publication internationale: WO 2019/101716

(56) Documents cités:
- EP-A1- 2 608 309
- EP-B1- 2 694 588
- FR-A1- 3 001 341
- US-A1- 2003 111 776
- US-A1- 2004 265 660
- BASF: "Engineering plastics and polyurethanes for automotive electrics; Product applications, typical values", 1 January 2016 (2016-01-01), pages 1 - 76, XP093035058, Retrieved from the Internet <URL:https://www.scribd.com/document/306914159/Engineering-plastics-E-E-automotive-pdf> [retrieved on 20230327]
- BASF: "ENGINEERING PLASTICS AND POLYURETHANES FOR AUTOMOTIVE ELECTRICS", HTTPS://WWW.PLASTICSPORTAL.NET/WA/PLASTICSEU~RU_RU/FUNCTION/CONVERSIONS:/PUBLISH/COMMON/UPLOAD/ENGINEERING_PLASTICS/ENGINEERING_PLASTICS_E_E_AUTOMOTIVE.PDF, 31 August 2016 (2016-08-31), pages 1 - 37, XP055472469, Retrieved from the Internet <URL:https://www.plasticsportal.net/wa/plasticsEU~ru_RU/function/conversions:/publish/common/upload/engineering_plastics/Engineering_plastics_E_E_automotive.pdf> [retrieved on 20180503]
- THOMASON J L ET AL: "The dimensional stability of glass-fibre reinforced polyamide 66 during hydrolysis conditioning", COMPOSITES PART A: APPLIED SCIENCE AND MANUFACTURING, ELSEVIER, AMSTERDAM, NL, vol. 40, no. 5, 1 May 2009 (2009-05-01), pages 625 - 634, XP026022010, ISSN: 1359-835X, [retrieved on 20090422], DOI: 10.1016/J.COMPOSITESA.2009.02.017

## Description

La présente invention concerne, de manière générale, le domaine des véhicules automobiles de type électrique ou hybride, nécessitant l'utilisation de batteries électriques.

L'invention se rapporte, plus précisément, à un dispositif de refroidissement et/ou de chauffage d'une batterie pour véhicule automobile électrique ou hybride.

Le document "Engineering plastics and polyurethanes for automotive electrics; Products, applications, typical values" publié par BASF Août 2016 décrit des dispositifs de refroidissement pour batteries de véhicule automobile électriques.

Par « véhicule automobile électrique », on entend un véhicule tel que défini dans le règlement N°100 des Nations Unies concernant l'homologation des véhicules électriques à batterie.

L'un des buts recherchés dans ce domaine automobile est de proposer des véhicules de moins en moins polluants. Ainsi, les véhicules électriques ou hybrides comportant une batterie visent à remplacer progressivement les véhicules thermiques, tels que les véhicules à essence ou bien à gasoil.

Or, il s'avère que la batterie est un constituant du véhicule relativement complexe. Selon l'emplacement de la batterie dans le véhicule, il peut être nécessaire de la protéger des chocs et de l'environnement extérieur, qui peut être à des températures extrêmes et à une humidité variable. Il est également nécessaire d'éviter tout risque de flammes.

De plus, il est important que sa température de fonctionnement n'excède pas 55°C pour ne pas détériorer les cellules de la batterie et préserver sa durée de vie. A l'inverse, par exemple en hiver, il peut être nécessaire d'élever la température de la batterie de manière à optimiser son fonctionnement.

Le véhicule automobile électrique ou hybride nécessite ainsi un dispositif de refroidissement et/ou de chauffage de la batterie.

Des dispositifs de refroidissement d'une batterie, consistant en la circulation d'un fluide de transfert de chaleur autour de la batterie sont connus, de même que des batteries comportant un coffre de protection. En particulier, les batteries sont aujourd'hui équipées d'un coffre en métal.

Par ailleurs, les formes conférées à une structure métallique sont obtenues par un procédé d'emboutissage. Or, lorsque la forme du coffre est complexe, de par son emplacement par exemple, le procédé d'emboutissage n'est pas le plus performant pour obtenir ce type de spécificité.

Ce coffre présente également l'inconvénient d'être relativement lourd et de se dégrader relativement rapidement dans le temps, notamment s'il est situé dans un environnement humide.

Ainsi, il est recherché des matériaux remplaçant les structures métalliques connues, qui répondent au cahier des charges spécifiques mentionné ci-dessus et visant à améliorer le transfert thermique ayant lieu entre la batterie et le fluide de transfert de chaleur dans un dispositif de refroidissement d'une batterie.

Ces buts sont atteints grâce à un dispositif de refroidissement et/ou de chauffage d'une batterie de véhicule automobile électrique ou hybride, comprenant un coffre à batterie ayant les caractéristiques techniques essentielles telles que décrites dans le libellé de la revendication indépendante 1 du présent brevet. D'autres caractéristiques essentielles de la présente invention sont explicitement définies dans les libellés des revendications 2 à 5 du brevet.

Par « coffre à batterie », on entend au sens de la présente invention une enveloppe ou un boîtier, qui se place autour de la batterie. Le coffre défini dans le dispositif de refroidissement et/ou de chauffage de la présente invention n'est pas un élément constitutif de la batterie. Le coffre a une fonction de protection de la batterie. Le terme coffre désigne également un carter. Le terme coffre ne correspond pas au coffre du véhicule, destiné entre autres à accueillir des valises et autres objets.

Le dispositif de refroidissement et/ou de chauffage d'une batterie selon l'invention présente l'avantage d'être plus léger qu'un dispositif comprenant une structure métallique. Ce gain de poids participe à l'impact sur l'économie d'énergie ou de carburant recherché pour des véhicules dits propres.

Selon son emplacement dans le véhicule, ce coffre peut se trouver au contact d'un environnement agressif : température élevée en été, température très basse en hiver, au contact de chlorure de zinc, chocs, humidité importante. Il a été observé que le coffre selon l'invention présente une résistance satisfaisante à ces contraintes extérieures.

Par ailleurs, la présence éventuelle d'agents ignifugeants peut répondre aux critères d'inflammabilité requis.

De plus, il a été observé, que selon les constructeurs automobiles, la forme des batteries pouvaient varier. En effet, les constructeurs cherchent à loger cette batterie dans des espaces inutilisés ou relativement inutilisables jusqu'à présent. Or, la mise en forme d'une matière plastique par moulage ou injection est bien plus facile à réaliser que celle d'une plaque métallique.

D'autres caractéristiques, aspects, objets et avantages de la présente invention apparaîtront encore plus clairement à la lecture de la description et des exemples qui suivent.

Il est par ailleurs précisé que les expressions "*compris entre*... *et*..." et "*de*... *à*..." utilisées dans la présente description doivent s'entendre comme incluant chacune des bornes mentionnées.

### Le dispositif

### Le polyamide

Le coffre du dispositif de refroidissement et/ou de chauffage selon l'invention comprend au moins une enveloppe constituée d'une composition comprenant une matrice comprenant au moins un polyamide.

Selon la présente invention, le terme "polyamide", également noté PA, vise :
- les homopolymères,
- les copolymères, ou copolyamides, à base de différents motifs amide, tel par exemple le copolyamide 6/12 avec des motifs amide dérivés du lactame-6 et du lactame-12.

La nomenclature utilisée pour définir les polyamides est décrite dans la norme ISO 1874-1:1992 "*Plastiques* - *Matériaux polyamides (PA) pour moulage et extrusion* - *Partie 1 : Désignation*", notamment en page 3 (tableaux 1 et 2) et est bien connue de l'homme du métier.

De manière générale, les polyamides comprennent au moins deux motifs répétitifs identiques ou distincts, ces motifs étant formés à partir des deux monomères, ou comonomères, correspondants. Les polyamides sont donc préparés à partir de deux ou plusieurs monomères, ou comonomères, choisis parmi un aminoacide, un lactame et/ou un diacide carboxylique et une diamine.

Le polyamide selon l'invention peut être un homopolyamide et comprendre au moins deux motifs répétitifs identiques obtenus par polycondensation de monomères choisis parmi un aminoacide, un lactame et un motif répondant à la formule (diamine en Ca).(diacide en Cb), avec a représentant le nombre de carbones de la diamine et b représentant le nombre de carbones du diacide, a et b étant chacun compris entre 4 et 36, tels que définis ci-dessous.

Le polyamide selon l'invention peut également être un copolyamide et comprendre au moins deux motifs répétitifs distincts, ces motifs pouvant être obtenus par polycondensation de monomères choisis parmi un aminoacide, un lactame et un motif répondant à la formule (diamine en Ca).(diacide en Cb), avec a représentant le nombre de carbones de la diamine et b représentant le nombre de carbones du diacide, a et b étant chacun compris entre 4 et 36, tels que définis ci-dessous.

Le polyamide selon l'invention peut être aliphatique, cycloaliphatique, semi-aromatique ou encore aromatique.

Le polyamide selon l'invention peut comprendre au moins un aminoacide choisi parmi l'acide 9-aminononanoïque, l'acide 10-aminodécanoïque, l'acide 12-aminododécanoïque et l'acide 11-aminoundécanoïque ainsi que ses dérivés, notamment l'acide N-heptyl-11-aminoundécanoïque.

Le polyamide selon l'invention peut comprendre au moins un lactame choisi parmi la pyrrolidinone, la piperidinone, le caprolactame, l'énantholactame, le caprylolactame, le pelargolactame, le décanolactame, l'undecanolactame, et le laurolactame.

Le polyamide selon l'invention peut comprendre au moins un motif répondant à la formule (diamine en Ca).(diacide en Cb).

Lorsque le motif (diamine en Ca) est une diamine aliphatique et linéaire de formule H₂N-(CH₂)ₐ-NH₂, la diamine en Ca est choisie parmi la butanediamine (a=4), la pentanediamine (a=5), l'hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13), la tetradécanediamine (a=14), l'hexadécanediamine (a=16), l'octadécanediamine (a=18), l'octadécènediamine (a=18), l'eicosanediamine (a=20), la docosanediamine (a=22) et les diamines obtenues à partir d'acides gras.

La diamine en Ca peut être une diamine aliphatique ramifiée choisie parmi la méthyl-pentane-méthylène-diamine (MPMD).

Lorsque la diamine est cycloaliphatique, elle est choisie parmi la bis(3,5-dialkyl-4-aminocyclohexyl)méthane, la bis(3,5-dialkyl-4-aminocyclohexyl)éthane, la bis(3,5-dialkyl-4-aminocyclo-hexyl)propane, la bis(3,5-dialkyl-4-aminocyclo-hexyl)butane, la bis-(3-méthyl-4-aminocyclohexyl)-méthane (BMACM ou MACM), la p-bis(aminocyclohexyl)-methane (PACM) et l'isopropylidenedi (cyclohexylamine) (PACP), la 1,3 bis(aminométhyl)cyclohexane (1,3-BAC, N° CAS : 2579-20-6) cis et trans, la 1,4 bis(aminométhyl)cyclohexane (1,4-BAC, N° CAS : 2549-07-9) cis et trans.

Elle peut également comporter les squelettes carbonés suivants : norbornyl méthane, cyclohexylméthane, dicyclohexylpropane, di(méthylcyclohexyl), di(methylcyclohexyl) propane. Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

Lorsque la diamine est alkylaromatique, elle est choisie parmi la 1,3-xylylène diamine et la 1,4-xylylène diamine et leur mélange.

Lorsque le monomère (diacide en Cb) est aliphatique et linéaire, il est choisi parmi l'acide succinique (y=4), ), l'acide pentanedioïque (y=5), l'acide adipique (y=6), l'acide heptanedioïque (y=7), l'acide octanedioïque (y=8), l'acide azélaïque (y=9), l'acide sébacique (y=10), l'acide undécanedioïque (y=11), l'acide dodécanedioïque (y=12), l'acide brassylique (y=13), l'acide tetradécanedioïque (y=14), l'acide hexadécanedioïque (y=16), l'acide octadécanoïque (y=18), l'acide octadécènoïque (y=18), l'acide eicosanedioïque (y=20), l'acide docosanedioïque (y=22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque le diacide est cycloaliphatique, il peut comporter les squelettes carbonés suivants : norbornyl méthane, cyclohexylméthane, dicyclohexylméthane, dicyclohexylpropane, di(méthylcyclohexyl), di(methylcyclohexyl)propane.

Lorsque le diacide est aromatique, il est choisi parmi l'acide téréphtalique, isophtalique et le diacide naphtalènique.

A titre d'exemples de copolyamides, on peut citer des copolymères de caprolactame et de laurolactame (PA 6/12), des copolymères de caprolactame, d'acide adipique et d'hexaméthylène diamine (PA 6/66), des copolymères de caprolactame, de laurolactame, d'acide adipique et d'hexaméthylène diamine (PA 6/12/66), des copolymères de caprolactame, d'acide azélaïque et d'hexaméthylène diamine, d'acide amino-11-undécanoïque et de laurolactame, (PA 6/69/11/12), des copolymères de caprolactame, d'acide adipique et d'hexaméthylène diamine, d'acide amino-11-undécanoïque et de laurolactame (PA 6/66/11/12), des copolymères d'acide azélaïque et d'hexaméthylène diamine et de laurolactame (PA 69/12).

De préférence, le polyamide utilisé dans la composition selon l'invention est choisi parmi l'homopolyamide PA6 obtenu par polycondensation du caprolactame ou de l'acide aminocaporïque, l'homopolyamide PA11 obtenu par polycondensation de l'acide amino-11-undécanoïque, l'homopolyamide PA12 obtenu par polycondensation du laurolactame ou de l'acide amino-12-dodécanoïque, le copolyamide PA66 obtenu par polycondensation de l'hexaméthylènediamine et de l'acide adipique.

Plus particulièrement, les motifs polyamides sont choisis parmi PA6, PA66, PA 6/66, PA46, PA6T/66, PA6T/6I/66, PA610, PA612, PA 69/12, PA 614, PA 6/12, PA11/12, PA12, PA11, PA1010, PA1012, PA618, PA10T, PA 6/12/66, PA 4T, PA 9T, PA12/10T, PA1010/10T, PA 6/6T/10T, PA 11/6T/10T, PA 12/6T/10T, PA 6/69/11/12, PA 6/66/11/12, PA11/10T, MXDT/10T, MPMDT/10T et BACT/10T et leurs mélanges.

On peut utiliser des mélanges de polyamides. Avantageusement, la viscosité relative des polyamides, mesurée en solution à 1% dans l'acide sulfurique à 20°C, est comprise entre 1,5 et 5.

Le polyamide ou le mélange de polyamides est choisi de préférence suffisamment semi-cristallin, c'est-à-dire avec une enthalpie de fusion supérieure ou égale à 25J/g (mesurée par DSC).

Préférentiellement, le polyamide ou le mélange de polyamides doit pouvoir être utilisé à des températures de service élevées. Un critère possible de choix est de les choisir préférentiellement avec une température de fusion supérieure ou égale à 170°C.

Par majoritaire, on entend au sens de la présente invention une proportion supérieure à 50% au sein de la matrice.

Le ou les polyamides représentent de 20 à 80% en poids, par rapport au poids total de la composition.

### Fibres de renfort

La composition constituant une enveloppe selon l'invention comprend de 20 à 80% en poids par rapport au poids total de la composition de fibres de renfort, qui ne présentent pas de propriétés thermiques. La composition comprend des fibres continues.

Les fibres présentes dans la composition de l'enveloppe peuvent être de dimensions différentes.

Les fibres de renfort peuvent être qualifiées de fibres courtes, longues ou continues. Un mélange de ces fibres de dimensions différentes et/ou de nature différente peut également être utilisé.

De préférence, les fibres dites courtes sont de longueur comprise entre 200 et 400 µm.

Les fibres dites longues présentent une longueur supérieure à 1000 µm.

Ces fibres de renfort peuvent être choisies parmi :
- les fibres minérales, celles-ci ayant des températures de fusion Tf' élevées et supérieures à la température de fusion Tf dudit polyamide présent dans la matrice de la composition du coffre selon l'invention et supérieures à la température de polymérisation et/ou de mise en oeuvre,
- les fibres polymériques ou de polymère ayant une température de fusion Tf' ou à défaut de Tf', une température de transition vitreuse Tg', supérieure à la température de polymérisation ou supérieure à la température de fusion Tf dudit polyamide présent dans la matrice de la composition du coffre selon l'invention et supérieure à la température de mise en oeuvre,
- les fibres naturelles,
- ou les mélanges des fibres citées ci-haut.

Comme fibres minérales convenables pour l'invention, on peut citer les fibres de carbone, ce qui inclut les fibres de nanotubes ou nanotubes de carbone (NTC), les nanofibres de carbone ou les graphènes ; les fibres de silice comme les fibres de verre, notamment de type E, R ou S2 ; les fibres de bore ; les fibres céramiques, notamment fibres de carbure de silicium, fibres de carbure de bore, fibres de carbonitrure de bore, fibres de nitrure de silicium, fibres de nitrure de bore, les fibres de basalte ; les fibres ou filaments à base de métaux et/ou de leurs alliages ; les fibres des oxydes métalliques, notamment d'alumine (Al₂O₃) ; les fibres métallisées comme les fibres de verre métallisées et les fibres de carbone métallisées ou les mélanges des fibres précitées.

La longueur des fibres de verre est mesurée selon la norme ISO 22314 :2006(E).

Comme fibres polymériques convenables pour l'invention, on peut citer :
- les fibres à base de polymère thermoplastique amorphe et présentent une température de transition vitreuse Tg supérieure à la Tg du polyamide ou mélange de polyamides, présent(s) dans la matrice, lorsque ce dernier est amorphe ; ou supérieure à la Tf du polyamide ou mélange de polyamides présent(s) dans la matrice, lorsque ce dernier est semi-cristallin.

Avantageusement, elles sont à base de polymère thermoplastique semi-cristallin et présentent une température de fusion Tf supérieure à la Tg du polyamide ou mélange de polyamides présent(s) dans la matrice, lorsque ce dernier est amorphe ; ou supérieure à la Tf du polyamide ou mélange de polyamides présent(s) dans la matrice lorsque ce dernier est semi-cristallin. Ainsi, il n'y a aucun risque de fusion pour les fibres organiques de constitution du matériau de renfort lors de l'imprégnation par la matrice thermoplastique du composite final.
- les fibres de polymères thermodurcissables et plus particulièrement choisies parmi : les polyesters insaturés, les résines époxy, les esters vinyliques, les résines phénoliques, les polyuréthanes, les cyanoacrylates et les polyimides, tels que les résines bis-maléimide, les aminoplastes résultant de la réaction d'une amine telle que la mélamine avec un aldéhyde tel que le glyoxal ou le formaldéhyde,
- les fibres de polymères thermoplastiques et plus particulièrement choisies parmi : le polyéthylène téréphtalate (PET), le polybutylène téréphtalate (PBT),
- les fibres de polyamides,
- les fibres d'aramides (comme le Kevlar^{®}) et polyamides aromatiques tels que ceux répondant à l'une des formules : PPDT, MPDI, PAA et PPA, avec PPD et MPD étant respectivement la p- et m-phénylène diamine, PAA étant les polyarylamides et PPA étant les polyphtalamides,
- les fibres de copolymères blocs de polyamide tel que le polyamide/polyéther, les fibres de polyaryléthers cétones (PAEK) telles que la polyétheréther cétone (PEEK), la polyéthercétone cétone (PEKK), la polyéthercétoneéthercétone cétone (PEKEKK).

Parmi les fibres d'origine naturelle, et notamment végétale, on peut citer les fibres à base de lin, de ricin, de bois, de kénaf, de noix de coco, de chanvre, de jute, de lignine, de bambou, de soie notamment d'araignée, de sisal, et d'autres fibres cellulosiques, en particulier de viscose. Ces fibres d'origine végétale peuvent être utilisées pures, traitées ou bien enduites d'une couche d'enduction, en vue de faciliter l'adhérence et l'imprégnation de la matrice polymère.

Les fibres de renfort peuvent constituer un matériau fibreux, qui peut également être un tissu, tressé ou tissé avec des fibres.

Il peut également correspondre à des fibres avec des fils de maintien.

Ces fibres de constitution peuvent être utilisées seules ou en mélanges. Ainsi, des fibres organiques peuvent être mélangées aux fibres minérales pour être imprégnées de la matrice polymère et former le matériau fibreux pré-imprégné.

Les mèches de fibres organiques peuvent avoir plusieurs grammages. Elles peuvent en outre présenter plusieurs géométries. Les fibres peuvent se présenter sous forme de fibres courtes, qui composent alors les feutres ou les non tissés pouvant se présenter sous la forme de bandes, nappes, ou morceaux, ou sous forme de fibres continues, qui composent les tissus 2D, les tresses ou mèches de fibres unidirectionnelles (UD) ou non tissées. Les fibres de constitution du matériau fibreux peuvent en outre se présenter sous forme d'un mélange de ces fibres de renfort de différentes géométries.

De préférence le matériau fibreux est constitué par des fibres continues de carbone, de verre ou de carbure de silicium ou leur mélange, en particulier des fibres de carbone. Il est utilisé sous forme d'une mèche ou de plusieurs mèches.

Les fibres de renfort courtes préférées sont des fibres courtes choisies parmi les : fibres de carbone, y compris métallisées, fibres de verre, y compris métallisées de type E, R, S2, fibres d'aramides (comme le Kevlar^{®}) ou de polyamides aromatiques, les fibres de polyaryléthers cétones (PAEK), telle que la polyétheréther cétone (PEEK), fibres de la polyéthercétone cétone (PEKK), fibres de la polyéthercétoneéthercétone cétone (PEKEKK) ou leurs mélanges.

De préférence, les fibres de renfort sont sélectionnées parmi les fibres de verre, de carbone, de céramique, d'aramide ou leurs mélanges.

Selon un mode de réalisation de l'invention, une enveloppe du coffre du dispositif selon l'invention présente des propriétés de conduction de la chaleur. Selon ce mode de réalisation préféré, les fibres de renforts seront de préférence choisies parmi les fibres de carbone, les fibres de nitrure de bore.

Selon un autre mode de réalisation de l'invention, une enveloppe du coffre présente des propriétés isolantes à la chaleur. Selon ce mode de réalisation préféré, les fibres de renforts seront de préférence choisies parmi les fibres de verre, les fibres de basalte, les fibres d'aramide.

En fonction de la taille des fibres utilisées : elles sont des fibres continues, la teneur en fibres de renfort peut être différente dans la composition.

La teneur en fibres est préférentiellement comprise entre 40 et 80% en poids de fibres de renfort.

### Composant thermiquement conducteur

La composition constituant une enveloppe du coffre de batterie du dispositif selon l'invention comprend de 0 à 20% en poids par rapport au poids total de la composition d'au moins un composant thermiquement conducteur, de préférence de 0,1 à 20%, et plus préférentiellement de 5 à 20%.

Les composants thermiquement conducteurs permettent de conférer à la matrice polymère, qui les accueille, une conductivité thermique, ou bien d'en augmenter sa conductivité thermique.

Les composants thermiquement conducteurs pourront être choisis parmi le carbone, les fibres de carbone, le noir de carbone comme par exemple celui vendu par la société Imerys sous la dénomination Ensaco 250G, les nanotubes de carbone (noté NTC) comme par exemple ceux vendus par Arkema sous la forme de MB Graphistrength^{®}, le graphite expansé comme par exemple la gamme Timrex^{®}C-THERM^{™}, et notamment le produit de dénomination commerciale Timrex^{®}C-THERM^{™} 001 vendu par la société Imerys, le nitrure d'aluminium et le nitrure de bore.

### Les modifiants chocs

La composition constituant une enveloppe du coffre de batterie du dispositif selon l'invention comprend de 0 à 20% en poids par rapport au poids total de la composition d'au moins un modifiant choc.

Le modifiant choc est avantageusement constitué par un polymère présentant un module de flexion inférieur à 100 MPa mesuré selon la norme ISO 178 à 50% HR et de Tg inférieure à 0°C mesurée selon la norme 11357-2 de 2013.

La température de transition vitreuse Tg des polyamides est mesurée à l'aide d'un calorimètre différentiel à balayage (DSC), après un deuxième passage en chauffe, suivant la norme ISO 1 1357-2:2013. La vitesse de chauffage et de refroidissement est de 20°C/min.

De préférence, le modifiant choc est constitué d'une ou plusieurs polyoléfines, une partie ou la totalité de celles-ci portant une fonction choisie parmi les fonctions acide carboxylique, anhydride carboxylique et époxyde. Tout particulièrement, la polyoléfine peut être choisie parmi un copolymère d'éthylène et de propylène à caractère élastomère (EPR), un copolymère éthylène-propylène-diène à caractère élastomère (EPDM) et un copolymère éthylène/(méth)acrylate d'alkyle.

La composition peut comprendre jusqu'à 20% en poids, par rapport au poids total de ladite composition, d'une polyoléfine semi-cristalline ou d'un mélange de polyoléfines, présentant un module de flexion, mesuré selon la norme ISO 178 à 50% HR, supérieur à 300 MPa, avantageusement supérieur à 800 MPa.

Ce modifiant choc est une polyoléfine fonctionnalisée (B1).

Selon l'invention, on entend par polyoléfine fonctionnalisée (B1) les polymères suivants.

La polyoléfine fonctionnalisée (B1) peut être un polymère d'alpha-oléfine ayant des motifs réactifs : les fonctionnalités. De tels motifs réactifs sont les fonctions acides carboxyliques, anhydrides, ou époxy.

A titre d'exemple, on peut citer comme polyoléfines les homopolymères ou copolymères d'alpha oléfines ou de dioléfines, telles que par exemple, éthylène, propylène, butène-1, octène-1, butadiène, et plus particulièrement :
- les homopolymères et copolymères de l'éthylène, en particulier LDPE, HDPE, LLDPE (linear low density polyethylene, ou polyéthylène basse densité linéaire), VLDPE (very low density polyethylene, ou polyéthylène très basse densité) et le polyéthylène métallocène,
- les homopolymères ou copolymères du propylène,
- les copolymères éthylène/alpha-oléfine tels qu'éthylène /propylène, les EPR (abréviation d'ethylene-propylene-rubber) et éthylène/propylène/diène (EPDM),
- les copolymères blocs styrène/éthylène-butène/styrène (SEBS), styrène/butadiène/styrène (SBS), styrène/isoprène/styrène (SIS), styrène/éthylène-propylène/styrène (SEPS),
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle (EVA), la proportion de comonomère pouvant atteindre 40% en poids.

Ces polyoléfines décrites ci-dessus peuvent être greffées, co-polymérisées ou ter polymérisées par des motifs réactifs (les fonctionnalités), tels que les fonctions acides carboxyliques, anhydrides, ou époxy.

Plus particulièrement, ces polyoléfines sont greffées ou co- ou ter polymérisées par des époxydes insaturés tels que le (méth)acrylate de glycidyle, ou par des acides carboxyliques ou les sels ou esters correspondants tels que l'acide (méth)acrylique (celui-ci pouvant être neutralisé totalement ou partiellement par des métaux tels que Zn, etc.) ou encore par des anhydrides d'acides carboxyliques tels que l'anhydride maléique.

La polyoléfine fonctionnalisée (B1) peut être choisie parmi les (co)polymères suivants, greffés avec anhydride maléique ou méthacrylate de glycidyle, dans lesquels le taux de greffage est par exemple de 0,01 à 5% en poids :
- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/ propylène, les EPR (abréviation d'éthylène-propylene-rubber) et éthylène/propylène/diène (EPDM),
- les copolymères blocs styrène/éthylène-butène/styrène (SEBS), styrène/butadiène/styrène (SBS), styrène/isoprène/ styrène (SIS), styrène/éthylène-propylène/styrène (SEPS),
- des copolymères éthylène et acétate de vinyle (EVA), contenant jusqu'à 40% en poids d'acétate de vinyle,
- des copolymères éthylène et (méth)acrylate d'alkyle, contenant jusqu'à 40% en poids de (méth)acrylate d'alkyle,
- des copolymères éthylène et acétate de vinyle (EVA) et (méth)acrylate d'alkyle, contenant jusqu'à 40% en poids de comonomères.

Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5% en poids.

La polyoléfine fonctionnalisée (B1) peut être aussi choisie parmi les copolymères éthylène/propylène majoritaires en propylène greffés par de l'anhydride maléique puis condensés avec du polyamide (ou un oligomère de polyamide) mono aminé (produits décrits dans EP-A-0342066).

La polyoléfine fonctionnalisée (B1) peut aussi être un co- ou ter polymère d'au moins les motifs suivants :
(1) éthylène,
(2) (méth)acrylate d'alkyle ou ester vinylique d'acide carboxylique saturé et
(3) anhydride tel que anhydride maléique ou acide (méth)acrylique ou époxy tel que (méth)acrylate de glycidyle.

A titre d'exemple de polyoléfines fonctionnalisées de ce dernier type, on peut citer les copolymères suivants, où l'éthylène représente de préférence au moins 60% en poids et où le termonomère (la fonction) représente par exemple de 0,1 à 12% en poids du copolymère :
- les copolymères éthylène/(méth)acrylate d'alkyle/acide (méth)acrylique ou anhydride maléique ou méthacrylate de glycidyle;
- les copolymères éthylène/acétate de vinyle/anhydride maléique ou méthacrylate de glycidyle ;
- les copolymères éthylène/acétate de vinyle ou (méth)acrylate d'alkyle / acide (méth)acrylique ou anhydride maléique ou méthacrylate de glycidyle.

Dans les copolymères qui précèdent, l'acide (méth)acrylique peut être salifié avec Zn ou Li.

Le terme "(méth)acrylate d'alkyle" dans (B1) désigne les méthacrylates et les acrylates d'alkyle en C₁ à Cs, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Par ailleurs, les polyoléfines précitées (B1) peuvent aussi être réticulées par tout procédé ou agent approprié (diépoxy, diacide, peroxyde, etc.) ; le terme polyoléfine fonctionnalisée comprend aussi les mélanges des polyoléfines précitées avec un réactif difonctionnel tel que diacide, dianhydride, diépoxy, etc. susceptible de réagir avec celles-ci ou les mélanges d'au moins deux polyoléfines fonctionnalisées pouvant réagir entre elles.

Les copolymères mentionnés ci-dessus (B1) peuvent être copolymérisés de façon statistique ou séquencée et présenter une structure linéaire ou ramifiée.

Le poids moléculaire, l'indice MFI, la densité de ces polyoléfines peuvent aussi varier dans une large mesure, ce que l'homme de l'art appréciera. L'indice MFI, abréviation de Melt Flow Index, est l'indice de fluidité à l'état fondu. On le mesure selon la norme ASTM 1238.

Avantageusement, les polyoléfines fonctionnalisées (B1) sont choisies parmi tout polymère comprenant des motifs alpha oléfiniques et des motifs porteurs de fonctions réactives polaires comme les fonctions époxy, acide carboxylique ou anhydride d'acide carboxylique. A titre d'exemples de tels polymères, on peut citer les ter polymères de l'éthylène, d'acrylate d'alkyle et d'anhydride maléique ou de méthacrylate de glycidyle comme les Lotader^{®} de la Demanderesse ou des polyoléfines greffées par de l'anhydride maléique comme les Orevac^{®} de la Demanderesse ainsi que des terpolymères de l'éthylène, d'acrylate d'alkyle et d'acide (meth) acrylique. On peut citer aussi les homopolymères ou copolymères du polypropylène greffés par un anhydride d'acide carboxylique puis condensés avec des polyamides ou des oligomères mono aminés de polyamide, comme décrit dans la demande EP 0 342 066.

Plus particulièrement, les polyoléfines fonctionnalisées (B1) sont :
- les terpolymères d'éthylène, d'acrylate d'alkyle et d'anhydride maléique ;
- les terpolymères d'éthylène, d'acrylate d'alkyle et de méthacrylate de glycidyle ;
- les polypropylène et polyéthylènes greffés par l'anhydride maléique ;
- les copolymères d'éthylène et de propylène et éventuellement de diène monomère greffés par l'anhydride maléique ;
- les copolymères d'éthylène et d'octène greffés par l'anhydride maléique ;
et leur mélange.

La polyoléfine fonctionnalisée (B1) est présente en une teneur comprise entre 0 et 20 % en poids, de préférence entre 1 et 10 % en poids par rapport au poids total de la composition.

Avantageusement, la composition selon l'invention peut comprendre au moins une polyoléfine non fonctionnalisée (B2).

Une polyoléfine non fonctionnalisée (B2) est classiquement un homopolymère ou copolymère d'alpha oléfines ou de dioléfines, telles que par exemple, éthylène, propylène, butène-1, octène-1, butadiène. A titre d'exemple, on peut citer :
- les homopolymères et copolymères du polyéthylène, en particulier LDPE, HDPE, LLDPE (linear low density polyethylene, ou polyéthylène basse densité linéaire), VLDPE (very low density polyethylene, ou polyéthylène très basse densité) et le polyéthylène métallocène,
- les homopolymères ou copolymères du propylène,
- les copolymères éthylène/alpha-oléfine tels qu'éthylène /propylène, les EPR (abréviation d'ethylene-propylene-rubber) et éthylène/propylène/diène (EPDM),
- les copolymères blocs styrène/éthylène-butène/styrène (SEBS), styrène/butadiène/styrène (SBS), styrène/isoprène/styrène (SIS), styrène/éthylène-propylène/styrène (SEPS),
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle (EVA), la proportion de comonomère pouvant atteindre 40% en poids
et leur mélange.

Les copolymères mentionnés ci-dessus (B2) peuvent être copolymérisés de façon statistique ou séquencée et présenter une structure linéaire ou ramifiée.

Avantageusement, les polyoléfines (B2) non fonctionnalisées sont choisies parmi les homopolymères ou copolymères du polypropylène et tout homopolymère de l'éthylène ou copolymère de l'éthylène et d'un comonomère de type alpha oléfinique supérieur tel que le butène, l'hexène, l'octène ou le 4-méthyl-1-pentène. On peut citer par exemple les PP (PolyPropylène), les polyéthylènes de haute densité, polyéthylènes de moyenne densité, polyéthylènes basse densité linéaire, polyéthylènes basse densité, polyéthylènes de très basse densité. Ces polyéthylènes sont connus par l'homme de l'art comme étant produits selon un procédé radicalaire, selon une catalyse de type Ziegler ou, plus récemment, selon une catalyse dite métallocène. Sont également préférés les copolymères de l'éthylène et d'acétate de vinyle (EVA), tels que ceux commercialisés sous la dénomination commerciale EVATANE^{®} par la Demanderesse.

Lorsque la composition constituant une enveloppe du dispositif selon l'invention comprend une ou plusieurs polyoléfines non fonctionnalisées, le MFI de (A) et les MFI de (B1) et (B2) peuvent être choisis dans une large plage, il est cependant recommandé pour faciliter la dispersion de (B1) et (B2) que les viscosités de (B1) et (B2) soient proches.

La polyoléfine non fonctionnalisée est présente en une teneur comprise entre 0 et 20 % en poids, de préférence entre 1 et 10 % en poids par rapport au poids total de la composition.

Le modifiant choc peut également être un copolymère formé de blocs polyamide et de blocs polyéther, les blocs polyamide et les blocs polyéther étant reliés par une fonction ester. Ces produits sont décrits dans le document FR 2 273 021 et vendus sous le nom commercial PEBAX^{®} par la société ARKEMA.

Les copolymères à blocs polyamide (abrégé ci-dessous PA) et à blocs polyéther (abrégé ci- dessous PE) résultent de la copolycondensation de blocs polyamide à extrémités réactives avec des blocs polyéther à extrémités réactives. Par exemple, on peut faire réagir :
- du polyéther diol, et un polyamide diacide carboxylique
- de la polyétherdiamine et un polyamide diacide carboxylique,
- du polyétherdiol et un polyamide diamine.

Les blocs polyamides à bouts de chaînes dicarboxyliques proviennent par exemple de la condensation de précurseurs de polyamides en présence d'un diacide carboxylique régulateur de chaîne. Les blocs polyamides à bouts de chaînes diamine proviennent par exemple de la condensation de précurseurs de polyamides en présence d'une diamine régulatrice de chaîne. Ainsi, la liaison entre les blocs est soit une liaison ester, soit une liaison amide.

Les polymères à blocs PA et à blocs PE peuvent comprendre un seul bloc PA et un seul bloc PE.

Ils peuvent aussi comprendre plusieurs blocs PA identiques en termes de structure du ou des monomères constitutifs du polyamide et PE identiques répartis de façon aléatoire. Lesdits polymères peuvent être préparés par réaction simultanée des blocs PE, et des précurseurs des blocs PA. On obtient alors un polymère ayant des blocs PE et des blocs PA de longueur très variable dépendant du moment au cours duquel le régulateur de chaîne intervient durant la formation du bloc PA, mais aussi les différents réactifs ayant réagi de façon aléatoire qui sont répartis de façon aléatoire (statistique) le long de la chaîne polymère.

La composition constituant une enveloppe du coffre de batterie du dispositif selon l'invention comprend de 0 à 20% en poids par rapport au poids total de la composition d'au moins un modifiant choc, de préférence de 0,1 à 20%, et plus préférentiellement de 5 à 20%.

### Additifs

La composition constituant une enveloppe du coffre de batterie du dispositif selon l'invention peut également comprendre de 0 à 20% d'additifs.

De préférence, les additifs présents dans la composition constituant le coffre sont choisis parmi les stabilisants thermiques, les plastifiants, les lubrifiants, les pigments organiques ou inorganiques, les anti-UV, les antistatiques, les charges minérales, et les charges organiques.

Ce stabilisant thermique peut être choisi parmi un stabilisant à base de cuivre, un stabilisant organique et leur mélange.

Le stabilisant à base de cuivre peut être constitué d'un ou de plusieurs constituants choisis parmi les composés à base de cuivre tels que le chlorure cuivreux, le chlorure cuivrique, le bromure cuivreux, le bromure cuivrique, l'iodure cuivreux, l'iodure cuivrique, l'acétate cuivreux et l'acétate cuivrique.

On peut citer les halogénures, les acétates d'autres métaux tels l'argent. Ces composés à base de cuivre sont typiquement associés à des halogénures de métaux alcalins. Un exemple bien connu est le mélange de CuI et KI, où le ratio CuI:KI est typiquement compris entre 1:5 à 1:15. Un exemple d'un tel stabilisant est le Polyadd P201 de la société Ciba.

On trouvera de plus amples détails sur les stabilisants à base de cuivre dans le brevet US 2,705,227. Plus récemment, sont apparus des stabilisants à base de cuivre tel les cuivres complexés comme les Bruggolen H3336, H3337, H3373 de la société Brueggemann.

Le stabilisant à base de cuivre est choisi parmi les halogénures de cuivre, l'acétate de cuivre, les halogénures de cuivre ou l'acétate de cuivre en mélange avec au moins un halogénure de métal alcalin, et leurs mélanges, de préférence les mélanges d'iodure de cuivre et d'iodure de potassium (CuI/KI).

Le stabilisant organique peut être choisi, sans que cette liste soit restrictive, parmi :
- les anti-oxydants phénoliques, par exemple l'Irganox 245, l'Irganox 1010, l'Irganox 1098 de la société Ciba, l'Irganox MD1024 de la société Ciba, le Lowinox 44B25 de la société Great Lakes,
- les stabilisants à base de phosphore, comme les phosphites, par exemple l'Irgafos 168 de la société Ciba,
- un absorbeur UV, telle Tinuvin 312 de la société Ciba,
- un HALS, comme précédemment mentionné,
- un stabilisant de type amine, tel le Naugard 445 de la société Crompton, ou encore de type amine encombrée tel le Tinuvin 770 de la société Ciba,
- un stabilisant polyfonctionnel telle Nylostab S-EED de la société Clariant.

On peut bien évidemment envisager un mélange de deux, ou plus, de ces stabilisants organiques.

La quantité de stabilisant(s) thermique(s) au sein de la composition est de préférence comprise entre 0,05 et 5 % en poids, par rapport au poids total de la composition.

Les additifs peuvent notamment être choisis parmi les plastifiants, tels que le BBSA (N-(n-butyl) benzene sulfonamide), les lubrifiants, par exemple l'acide stéarique ; les pigments organiques ou inorganiques ; les anti-UV; les antistatiques ; les charges minérales, telles que, par exemple, le talc, le carbonate de calcium, le dioxyde de titane, l'oxyde de zinc et les charges organiques.

Parmi les charges, on peut notamment citer la silice, l'oxyde de titane ou encore les billes de verre.

De préférence, les additifs sont présents dans la composition généralement en une teneur de 0,1 à 15% en poids, de préférence 1 à 15 en poids par rapport au poids total de la composition.

### Agent ignifugeant

La composition constituant une enveloppe du coffre comprend une matrice comprenant au moins un agent ignifugeant.

De préférence, l'agent ignifugeant est choisi parmi des agents ignifugeants sans halogène, tels que décrits dans US 2008/0274355 et notamment un sel métallique choisi parmi un sel métallique de l'acide phosphinique, un sel métallique de l'acide diphosphinique, un polymère contenant au moins un sel métallique de l'acide phosphinique, un polymère contenant au moins un sel métallique de l'acide diphosphinique. L'agent ignifugeant peut également être choisi parmi du phosphore rouge, un oxyde d'antimoine, un oxyde de zinc, un oxyde de fer, un oxyde de magnésium, des borates métalliques, tels que un borate de zinc, des pyrophosphates de mélamine, des cyanurates de mélamine, des agents anti-goutte de nature siliconée ou fluorée.

L'agent ignifugeant peut aussi être un mélange des agents précités.

Ils peuvent également être des agents ignifugeants halogénés tels que un polystyrène bromé ou polybromé, un polycarbonate bromé ou un phénol bromé.

De préférence, le sel métallique de l'acide phosphinique selon l'invention est de formule (I) suivante et le sel métallique de l'acide diphosphinique est de formule (II) suivante : 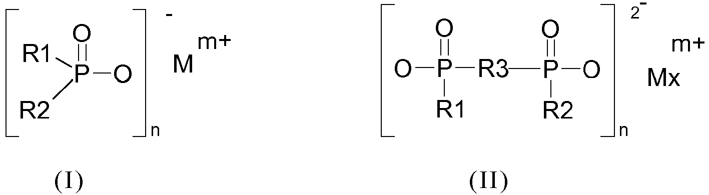 avec
R₁ et R₂, indépendamment l'un de l'autre, désignent un groupe alkyle en C₁-C₆ linéaire ou ramifié, ou un groupe aryle;
R₃ représente un groupe alkylène en C₁-C₁₀ linéaire ou ramifié, arylène en C₆-C₁₀, alkylarylène en C₆-C₁₀, ou arylalkylène en C₆-C₁₀,
M est un ion Mg, Ca, Al, Sb, Sn, Ge, Ti, Zn, Fe, Zr, Ce, Bi, Sr, Mn, Li, Na, K et/ou une base amine protonnée
m désigne un entier de 1 à 4,
n désigne un entier de 1 à 4,
x désigne un entier de 1 à 4,
n et m étant choisis de manière à ce que le sel soit neutre, c'est-à-dire qu'il ne soit pas porteur d'une charge électrique.

De préférence, M représente un ion calcium, magnésium, aluminium ou zinc.

De préférence, R₁ et R₂, indépendamment l'un de l'autre, désignent un groupe méthyle, éthyle, *n*-propyle, *iso*-propyle, *n*-butyle, *tertio-*butyle, *n*-pentyle et/ou phényle.

De préférence, R₃ représente un groupe méthylène, éthylène, *n-*propylène, *iso*-propylène, *n*-butylène, *tertio*-butylène, *n*-pentylène, *n-*octylène, *n*-dodécylène; phénylène, naphthylène; méthylphénylène, éthylphénylène, *tertio*-butylphénylène, méthylnaphthylène, éthylnaphthylène, *tertio*-butylnaphthylène; phénylméthylène, phényléthylène, phénylpropylène, or phénylbutylène.

Plus particulièrement, la teneur en agent ignifugeant éventuellement présent dans la matrice de la composition est comprise entre 10 et 30% en poids, de préférence 15 et 25% en poids, et plus particulièrement entre 17 et 22% en poids par rapport au poids total du ou des polyamides présent(s) dans la composition.

### Les positions des enveloppes et leur nombre

Les caractéristiques essentielles du dispositif de refroidissement et/ou de chauffage d'une batterie de véhicule automobile électrique ou hybride, de la présente invention sont explicitement définies dans le libellé de la revendication indépendante 1.

D'autres caractéristiques techniques de l'invention sont explicitement définies dans les libellés des revendications dépendantes 2 à 5.

Ce dispositif va permettre de limiter les échanges de chaleur entre la batterie et l'extérieur du dispositif.

L'enveloppe interne constituant la présente invention, ses caractéristiques techniques sont explicitement définies dans le libellé de la revendication indépendante 1 du brevet.

En particulier, selon un mode de réalisation dans lequel le fluide de transfert de chaleur choisi est liquide, par exemple de l'eau glycolée, la/les couches présentant une faible perméabilité à l'eau permet/permettent d'éviter, selon son/leur emplacement, des fuites du fluide vers la batterie ou vers l'extérieur du dispositif de refroidissement et/ou chauffage.

Selon un mode de réalisation préféré, cette/ces couche(s) peut/peuvent être en EVOH, en polyoléfines, telles que le polypropylène ou les polyéthylènes : PEHD, PEBD.

### Mesure de la conductivité thermique

Les mesures de conductivité thermique des matériaux sont réalisées suivant la technologie HOT DISK telle que détaillée dans la norme ISO 22007-2.

### Procédé de préparation de la composition

L'invention porte également sur un procédé de préparation de la composition telle que définie ci-dessus. Selon ce procédé, la composition peut être préparée par toute méthode, qui rend possible l'obtention d'un mélange homogène contenant la composition selon l'invention, et éventuellement d'autres additifs, tel que l'extrusion à l'état fondu, le compactage, ou encore le malaxeur à rouleau, tout en tenant compte de la taille des fibres de renfort.

On utilise avantageusement les dispositifs habituels de mélange et de malaxage de l'industrie des thermoplastiques tels que les extrudeuses, telles que les extrudeuses de type Double vis, et les malaxeurs, par exemple les co-malaxeurs BUSS.

### Procédé de fabrication du coffre

Selon la taille des fibres, le coffre de batterie selon l'invention peut être réalisé par différentes techniques.

Lorsque les fibres sont courtes, le coffre de batterie selon l'invention peut être obtenu par injection, extrusion, coextrusion, compression à chaud, multi-injection à partir d'au moins une composition telle que définie ci-dessus.

Lorsque les fibres sont longues ou continues, le coffre de batterie selon l'invention peut être réalisé par différentes techniques choisies parmi : pultrusion, enroulement filamentaire, thermocompression, moulage par infusion, moulage par transfert de résine (RTM), moulage structuré par injection et réaction (S-RIM) ou moulage par injection-compression. Une technique particulière en moule fermé est le RTM ou le S-RIM ou l'injection-compression. Le terme « résine » dans RTM s'identifie ici à la composition selon l'invention sans les fibres de renfort.

Selon un mode de réalisation particulier, le procédé de fabrication peut comprendre
- une étape d'application des fibres de renfort dans le moule, puis
- au moins une étape d'imprégnation desdites fibres par une composition précurseur de la composition selon l'invention.

Par composition précurseur de la composition selon l'invention, on entend une composition selon l'invention telle que définie ci-dessus, mais qui ne comprendrait pas les fibres de renfort.

### Circuit

La présente invention concerne également un circuit de refroidissement et/ou de chauffage d'une batterie de véhicule automobile électrique ou hybride, comprenant une boucle principale de circulation d'un fluide de transfert de chaleur pourvue de moyens destinés à la circulation du fluide de transfert de chaleur dans la boucle principale.

En outre, la boucle principale est raccordée à une pompe à chaleur réversible et à un dispositif de refroidissement et/ou chauffage tel que précédemment décrit.

Selon différents modes de réalisation, le fluide de transfert de chaleur peut être un gaz, par exemple l'air, ou un liquide, par exemple de l'eau glycolée.

Selon une caractéristique de l'invention, le circuit peut comprendre au moins une boucle secondaire raccordée à la boucle principale, la/les boucle(s) secondaire(s) étant raccordée(s) à l'habitacle du véhicule automobile et/ou à un circuit électronique raccordé à un moteur électrique du véhicule automobile et/ou à un moteur à combustion interne du véhicule automobile lorsque le véhicule automobile est de type hybride.

Avantageusement, le circuit peut comprendre un dispositif de commande configuré pour contrôler le transfert thermique de la boucle principale vers l'au moins une boucle secondaire telle que définie précédemment.

D'autres buts, avantages et caractéristiques ressortiront de la description qui va suivre, donnée à titre d'exemple purement illustratif et faite en référence au dessin annexés-sur lequel :

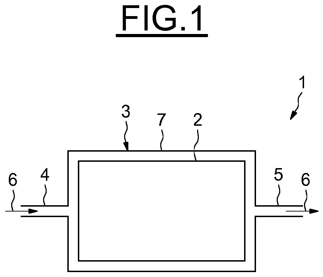

- la figure 1 est une vue en coupe d'un dispositif de refroidissement et/ou chauffage d'une batterie pour véhicule automobile électrique ou hybride selon un premier mode de réalisation de l'invention, le dispositif comprenant un coffre à batterie comportant une enveloppe ;

La figure 1 illustre un mode de réalisation d'un dispositif de refroidissement et/ou de chauffage d'une batterie de véhicule électrique ou hybride conforme à l'invention.

A la figure 1, le dispositif de refroidissement et/ou de chauffage, désigné par la référence numérique générale 1, d'une batterie 2 comprend un coffre à batterie 3. Le coffre 3 représenté est doté d'une enveloppe 7 comprenant :
- de 20 à 80% en poids par rapport au poids total de la composition de fibres de renfort,
- de 0 à 20% en poids par rapport au poids total d'au moins un composant thermiquement conducteur, de préférence de 0,1 à 20%, et plus préférentiellement de 5 à 20%,
- de 0 à 20% en poids par rapport au poids total d'au moins un modifiant choc, de préférence de 0,1 à 20%, et plus préférentiellement de 5 à 20%,
- de 0 à 20% en poids par rapport au poids total de la composition d'additifs, de préférence de 0,1 à 15%, et plus préférentiellement de 1 à 15%,
- le complément étant une matrice comprenant majoritairement au moins un polyamide et au moins un agent ignifugeant,
le coffre 3 délimitant un volume de refroidissement et/ou de chauffage de la batterie.

En outre, le dispositif 1 est pourvu d'une entrée et d'une sortie, respectivement 4 et 5, pour le passage d'un fluide de transfert de chaleur 6. La configuration du dispositif 1 illustré permet avantageusement le passage du fluide de transfert de chaleur 6 au contact de la batterie 2 de l'entrée 4 vers la sortie 5.

L'enveloppe 7 présente une conductivité thermique (λ) comprise entre 0.1 et 1 W/m.°K.

L'enveloppe 7 présente alors avantageusement des propriétés d'isolation thermique permettant, notamment, d'éviter une perte de chaleur via l'enveloppe 7.

Par ailleurs, la proportion particulière en fibres de renfort confère à l'enveloppe 7 une résistance mécanique élevée, adaptée à l'emplacement de l'enveloppe 7, c'est-à-dire au contact de l'environnement extérieur.

Le fluide de transfert de chaleur (6) a pour fonction de transférer la chaleur entre deux ou plusieurs sources de température. Ce fluide peut être un gaz, de l'air ou bien un liquide.

Une composition d'une enveloppe d'un coffre de batterie conforme à l'invention implique un meilleur transfert thermique entre la batterie et le fluide de transfert de chaleur, et donc un refroidissement et/ou un réchauffement de la batterie optimisé.

## Revendications

1. Dispositif de refroidissement et/ou de chauffage d'une batterie de véhicule automobile électrique ou hybride, comprenant un coffre à batterie (3) doté d'une enveloppe externe (7) constituée d'une composition comprenant :
- de 20 à 80% en poids par rapport au poids total de la composition de fibres de renfort, qui ne présentent pas de propriétés de conduction thermique,
- de 0 à 20% en poids par rapport au poids total d'au moins un composant thermiquement conducteur,
- de 0 à 20% en poids par rapport au poids total d'au moins un modifiant choc,
- de 0 à 20% en poids par rapport au poids total de la composition d'additifs,
- le complément étant une matrice comprenant majoritairement au moins un polyamide et au moins un agent ignifugeant ; le ou les polyamides représentant de 20 à 80% en poids par rapport au poids total de la composition,
la composition comprenant des fibres continues,
l'enveloppe présentant une conductivité thermique (λ) comprise entre 1 et 0,1 W/m.K,
- d'une entrée (4) de fluide de transfert de chaleur (6) ; et
- d'une sortie (5) de fluide de transfert de chaleur (6),
le coffre (3) délimitant un volume de refroidissement et/ou de chauffage de la batterie.

2. Circuit de refroidissement et/ou de chauffage d'une batterie de véhicule automobile électrique ou hybride, comprenant une boucle principale (13) de circulation d'un fluide de transfert de chaleur (6) pourvue de moyens destinés à la circulation du fluide de transfert de chaleur (6) dans la boucle principale, **caractérisé en ce que** la boucle principale (13) est raccordée à une pompe à chaleur réversible (14) et à un dispositif de refroidissement et/ou chauffage selon la revendication 1 .

3. Circuit de refroidissement et/ou de chauffage selon la revendication 2, **caractérisé en ce que** le fluide de transfert de chaleur (6) est un gaz.

4. Circuit de refroidissement et/ou de chauffage selon la revendication 2, **caractérisé en ce que** le fluide de transfert de chaleur (6) est l'air.

5. Circuit de refroidissement et/ou de chauffage selon la revendication 2, **caractérisé en ce que** le fluide de transfert de chaleur (6) est un liquide.

## Patentansprüche

1. Kühl- und/oder Heizvorrichtung einer Batterie eines Elektro- oder Hybridkraftfahrzeugs, umfassend einen Batteriekasten (3), der mit einer äußeren Hülle (7) versehen ist, die aus einer Zusammensetzung besteht, die Folgendes umfasst:
- von 20 bis 80 Gewichts-%, bezogen auf das Gesamtgewicht der Zusammensetzung, Verstärkungsfasern, die keine wärmeleitenden Eigenschaften aufweisen,
- von 0 bis 20 Gewichts-%, bezogen auf das Gesamtgewicht, mindestens einer wärmeleitenden Komponente,
- von 0 bis 20 Gewichts-%, bezogen auf das Gesamtgewicht mindestens eines Schlagzähmodifikators,
- von 0 bis 20 Gewichts-%, bezogen auf das Gesamtgewicht der Zusatzstoffzusammensetzung, Additive,
- wobei der Rest eine Matrix ist, die mehrheitlich mindestens ein Polyamid und mindestens ein Flammschutzmittel umfasst, wobei das Polyamid oder die Polyamide von 20 bis 80 Gewichts-% des Gesamtgewichts der Zusammensetzung darstellen,
die Zusammensetzung umfassend Endlosfasern,
wobei die Hülle eine Wärmeleitfähigkeit (λ) zwischen 1 und 0,1 W/m.K aufweist,
- einen Einlass (4) für Wärmeübertragungsfluid (6); und
- einen Auslass (5) für Wärmeübertragungsfluid (6),
wobei die Hülle (3) ein Kühl- und/oder Heizvolumen der Batterie begrenzt.

2. Kühl- und/oder Heizkreislauf einer Batterie eines Elektro- oder Hybridkraftfahrzeugs, umfassend eine Hauptschleife (13) zur Zirkulation eines Wärmeübertragungsfluids (6), die mit Einrichtungen zur Zirkulation des Wärmeübertragungsfluids (6) in der Hauptschleife versehen ist, **dadurch gekennzeichnet, dass** die Hauptschleife (13) mit einer reversiblen Wärmepumpe (14) und einer Kühl- und/oder Heizvorrichtung nach Anspruch 1 verbunden ist.

3. Kühl- und/oder Heizkreislauf nach Anspruch 2, **dadurch gekennzeichnet, dass** das Wärmeübertragungsmedium (6) ein Gas ist.

4. Kühl- und/oder Heizkreislauf nach Anspruch 2, **dadurch gekennzeichnet, dass** das Wärmeübertragungsmedium (6) Luft ist.

5. Kühl- und/oder Heizkreislauf nach Anspruch 2, **dadurch gekennzeichnet, dass** das Wärmeübertragungsmedium (6) eine Flüssigkeit ist.

## Claims

1. A cooling and/or heating device for an electric or hybrid motor vehicle battery comprising a battery box (3) provided with an outer envelope (7) consisting of a composition comprising:
- 20 to 80% by weight in relation to the total weight of the composition of reinforcing fibres, which do not have thermally conducting properties,
- 0 to 20% by weight in relation to the total weight of at least one thermoconductive component,
- 0 to 20% by weight in relation to the total weight of at least one impact modifier,
- 0 to 20% by weight in relation to the total weight of the composition of additives,
- where the complement being a matrix comprising mostly at least one polyamide and at least one flameproofing agent; the one or more polyamides representing 20 to 80% by weight in relation to the total weight of the composition,
the composition comprising continuous fibers,
the envelope having a thermal conductivity (λ) comprised between 1 and 0.1 W/m·K
- a heat transfer fluid (6) inlet (4); and
- a heat transfer fluid (6) outlet (5),
where the compartment (3) delimits a cooling and/or heating volume for the battery.

2. The cooling and/or heating circuit for an electric hybrid motor vehicle battery, comprising a main circulation loop (13) for a heat transfer fluid (6) provided with means intended for the circulation of the heat transfer fluid (6) in the main loop, **characterized in that** the main loop (13) is connected to a reversible heat pump (14) and a cooling and/or heating device according to claim 1.

3. The cooling and/or heating circuit according to claim 2, **characterized in that** the heat transfer fluid (6) is a gas.

4. The cooling and/or heating circuit according to claim 2, **characterized in that** the heat transfer fluid (6) is air.

5. The cooling and/or heating circuit according to claim 2, **characterized in that** the heat transfer fluid (6) is a liquid.
